(19) Europäisches Patentamt / European Patent Office / Office européen des brevets

(11) EP 4 611 094 A1

(12) **EUROPEAN PATENT APPLICATION**
published in accordance with Art. 153(4) EPC

(43) Date of publication:
**03.09.2025 Bulletin 2025/36**

(21) Application number: **23929511.6**

(22) Date of filing: **31.03.2023**

(51) International Patent Classification (IPC):
***H01M 10/0525*** *(2010.01)*

(52) Cooperative Patent Classification (CPC):
**H01M 10/0525;** Y02E 60/10

(86) International application number:
**PCT/CN2023/085767**

(87) International publication number:
**WO 2024/197928 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **LIU, Jing**
  **Ningde, Fujian 352100 (CN)**
- **XU, Ningbo**
  **Ningde, Fujian 352100 (CN)**
- **CHEN, Peipei**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **SECONDARY BATTERY AND ELECTRIC DEVICE**

(57) Provided in the present application is a secondary battery. The secondary battery comprises: a negative electrode sheet and an electrolyte, wherein the negative electrode sheet comprises a silicon-carbon composite material having a three-dimensional network crosslinked pore structure; and the electrolyte comprises a cyclic carbonate compound represented by formula I. By means of the cooperation of the three-dimensional network crosslinked pore structure of the silicon-carbon composite material and the cyclic carbonate compound of the electrolyte, the volume effect of an active material during the charging and discharging process is inhibited, the direct current resistance and gas output of the battery are reduced, and the cycle capacity retention rate of the battery is improved.

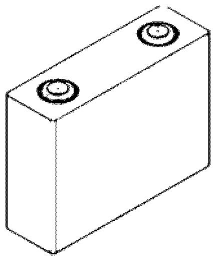


FIG. 1

EP 4 611 094 A1

## Description

### TECHNICAL FIELD

The present application relates to the technical field of secondary batteries, and in particular, to a secondary battery and an electric device.

### BACKGROUND

Recently, a secondary battery is widely applied in an energy storage power system, such as a hydraulic, thermal, wind, or solar power plant, and the like, and the fields of a power tool, an electric bicycle, an electric motorcycle, an electric vehicle, military equipment, aerospace, and the like.

An electrode active material having a high gram capacity tends to have poor cycle performance, and to achieve excellent cycle performance while improving the energy density of a battery through mutual coordination of components of the battery is a technical problem that needs to be solved in the art.

### SUMMARY

The present application has been made in view of the above problem, and an objective thereof is to provide a secondary battery. By matching an electrolyte solution with a negative electrode material, the volume effect of the active material during charge and discharge is suppressed, the direct current impedance of the battery is reduced, and the cycle capacity retention rate of the battery is improved.

A first aspect of the present application provides a secondary battery, including a negative electrode plate and an electrolyte solution. The negative electrode plate includes a silicon-carbon composite material having a three-dimensional network cross-linked pore structure, and the electrolyte solution includes a cyclic carbonate compound,
the cyclic carbonate compound being shown in formula I

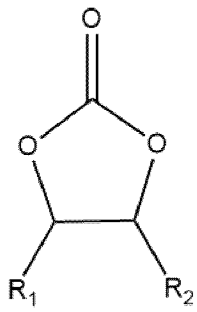

formula I

where $R_1$ and $R_2$ each independently comprise at least one of H and $C_1$-$C_6$ alkyl.

The silicon-carbon composite material having a three-dimensional network cross-linked pore structure has a stable porous framework and good mechanical strength, and can effectively reduce the volume change of silicon before and after charging and discharging while loading a high silicon content. Meanwhile, the cyclic carbonate compound coordinated in the electrolyte solution can be used to construct an interface component on the surface of the silicon-carbon composite material to form a stable interface film, thereby reducing the internal resistance of the battery, and improving the cycle performance.

In any embodiment, a pore volume of the silicon-carbon composite material per unit mass is Vm, with a unit of $cm^3/g$; in the electrolyte solution, a mass ratio of the cyclic carbonate compound based on a total mass of the electrolyte solution is EL, with a unit of g/g, and EL: Vm is 0.02-5, and optionally 0.05-3.5.

When the ratio EL: Vm between the pore volume Vm of the silicon-carbon composite and the mass proportion EL of the cyclic carbonate compound in the electrolyte solution satisfies the above range, the amount of the cyclic carbonate compound to be added and the pore volume Vm of the silicon-carbon composite can coordinate with each other to improve the cycle capacity retention ratio of the battery. Moreover, the addition of the cyclic carbonate in an appropriate mass content can also reduce decomposition gas generation due to excessive addition of the cyclic carbonate or preferential decomposition gas generation of other solvents due to insufficient addition of the cyclic carbonate, reduce volume expansion due to gas generation, and further improve the cycle performance.

In any embodiment, the pore volume Vm of the silicon-carbon composite material per unit mass is 0.01-0.3 $cm^3/g$, and optionally 0.02-0.15 $cm^3/g$.

When the pore volume of the silicon-carbon composite material satisfies the above range, it is possible to ensure

both the mechanical strength and the loading capacity of silicon, to improve the cycle performance of the battery by effective coordinating with the cyclic carbonate compound in the electrolytic solution, and to avoid the gas generation phenomenon caused by excessive addition of the cyclic carbonate.

In any embodiment, in the electrolyte solution, the mass ratio of the cyclic carbonate compound based on the total mass of the electrolyte solution is EL, with a unit of g/g, and a specific surface area of the silicon-carbon composite material is SSA, and EL: SSA is 0.00001-0.15, and optionally 0.00015-0.05.

When the ratio EL: SSA between the mass proportion of the cyclic carbonate compound in the electrolyte solution and the specific surface area SSA of the silicon-carbon composite material satisfies the above range, the cyclic carbonate compound can be effectively embedded into the pore structure of the silicon-carbon composite material to sufficiently contact with the silicon-carbon composite material to form a uniform interface film, so as to improve the interface stability, so that the internal resistance of the battery is reduced, and the cycle stability of the battery is improved; and moreover, decomposition gas generation due to excessive addition of the cyclic carbonate or preferential decomposition gas generation of other solvents due to insufficient addition of the cyclic carbonate can be reduced, volume expansion due to gas generation can be reduced, and the cycle performance can be further improved.

In any embodiment, the specific surface area SSA of the silicon-carbon composite material is 2-10 $m^2/g$, and optionally 3-7 $m^2/g$.

When the specific surface area SSA of the silicon-carbon composite material satisfies the above range, the specific surface area of the silicon-carbon composite material is large, and the dynamic performance of the material is good.

In any embodiment, the total pore volume of pores having a pore diameter less than or equal to 100 nm in the silicon-carbon composite material is V1 $cm^3/g$, and in the electrolyte solution, the mass ratio of the cyclic carbonate compound based on the total mass of the electrolyte solution is EL, with a unit of g/g, and EL: V1 is 0.05-50, and optionally 1-30.

When the ratio EL: V1 between the mass proportion EL of the cyclic carbonate compound in the electrolyte solution and the total pore volume V1 of pores having a pore diameter greater than or equal to 100 nm in the silicon-carbon composite material is within the above range, the cyclic carbonate compound may easily enter the pore structure of the silicon-carbon composite material, and coordinate with the pore structure to further increase the migration rate of ions in the electrode active material, thereby improving the cycle performance of the battery.

In any embodiment, the V1 of the silicon-carbon composite material is ≥0.001 $cm^3/g$, and optionally 0.005-0.01 $cm^3/g$.

When V1 of the silicon-carbon composite material is within the above range, the silicon-carbon composite material can effectively coordinate with the cyclic carbonate compound in the electrolyte solution to improve the cycle performance of the battery, and the gas generation phenomenon due to the excessive addition content of the cyclic carbonate can be avoided.

In any embodiment, the cyclic carbonate compound is selected from at least one of ethylene carbonate, propylene carbonate, 1,2-butylene carbonate, and 4,5-dimethyl ethylene carbonate.

The above cyclic carbonate compound has a high dielectric constant and a high ionic conductivity, and can be used to construct an interface component to form a stable interface film, so as to improve the cycle performance of the battery.

In any embodiment, the silicon-carbon composite material includes a carbon matrix having a three-dimensional network cross-linked pore structure, and silicon nanoparticles at least partially embedded into the three-dimensional network cross-linked pore structure of the carbon matrix.

When the silicon-carbon composite material having the above structure is applied to a secondary battery, the cycle performance and the energy density of the secondary battery can be simultaneously improved.

In any embodiment, the mass ratio of the silicon nanoparticles in the silicon-carbon composite material is greater than or equal to 40%, and optionally 40-60%.

The negative electrode material used in the secondary battery of the present application realizes a high loading capacity of silicon nanoparticles in the negative electrode material by using a carbon-based material having a three-dimensional network cross-linked pore structure, so that the silicon-carbon composite material has a high capacity, which can further increase the energy density of the battery.

In any embodiment, the silicon nanoparticles include one or more of a silicon oxide compound, amorphous silicon, crystalline silicon, and a silicon-carbon composite.

In any embodiment, the carbon matrix includes one or more of graphite, soft carbon, and hard carbon.

In any embodiment, the total volume of pores having a pore diameter greater than 100 nm in the carbon matrix particles is denoted by Vc1 $cm^3/g$, the total volume of pores having a pore diameter less than 100 nm in the carbon matrix particles is denoted by Vc2 $cm^3/g$, and the carbon matrix particles satisfy $1<Vc2/Vc1\leq 30$, and optionally $3\leq Vc2/Vc1\leq 25$.

By regulating the total pore volume proportion of pores having a specific size in the porous carbon matrix particles, the pore size distribution of the carbon matrix particles may be moderate, which can not only guarantee a high

silicon loading capacity of the silicon-carbon composite material and but also guarantee the mechanical strength of the silicon-carbon composite material, and large and small pore sizes can effectively coordinate with the molecular structure of the electrolyte solution to improve the ion transport rate in the electrolyte solution, so as to optimize the dynamic performance.

In any embodiment, a ratio of a powder compaction density P11 g/$cm^3$ of the silicon-carbon composite material tested after powder compaction for one time under an acting force of 20,000 N to a powder compaction density P21 g/$cm^3$ of the silicon-carbon composite material tested after powder compaction for 20 times under an acting force of 20,000 N satisfies $1.00<P21/P11\leq 1.20$, and optionally $1.02\leq P21/P11\leq 1.10$.

When the ratio of P21/P11 satisfies the above range, the silicon-carbon composite material has better compression resistance while having a higher gram capacity, and the structural stability of the negative electrode film layer is improved, so that the secondary battery containing the material has better cycle performance while having a higher energy density.

In any embodiment, the powder compaction density P11 g/$cm^3$ of the silicon-carbon composite material tested after powder compaction for one time under an acting force of 20,000 N satisfies $1.10\leq P11\leq 1.40$, and optionally $1.12\leq P11\leq 1.35$.

When the powder compaction density P11 g/$cm^3$ of the silicon-carbon composite material tested after powder compaction for one time under an acting force of 20,000 N satisfies the above range, the negative electrode film layer has a higher compaction density, so that the secondary battery has a higher energy density.

In any embodiment, the secondary battery includes at least one of a lithium ion battery, a sodium ion battery, a magnesium ion battery, and a potassium ion battery.

A second aspect of the present application provides an electric device, including the secondary battery according to the first aspect.

DESCRIPTION OF DRAWINGS

FIG. 1 is a schematic diagram of a secondary battery according to an embodiment of the present application;

FIG. 2 is an exploded view of the secondary battery according to the embodiment of the present application shown in FIG. 1; and

FIG. 3 is a schematic diagram of an electric device using the secondary battery as a power supply according to an embodiment of the present application.

Description of reference signs:
1-secondary battery; 11-housing; 12-electrode assembly; 13-cover plate.

DESCRIPTION OF EMBODIMENTS

Hereinafter, the embodiments of the binder, the preparation method, the electrolyte, the battery, and the electrical device of the present application are described below in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise specified, a numerical range "a-b" represents an abbreviated representation for a combination of any real numbers between a and b, where both a and b are real numbers. For example, the numerical range of "0-5" represents that all real numbers between "0-5" have been listed herein, and "0-5" is only an abbreviated representation of these numerical combinations. In addition, when a parameter is expressed as an integer $\geq 2$, it is equivalent to disclosing that the parameter is an integer such as 2, 3, 4, 5, 6, 7, 8, 9, 10, 11,

or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" represents "A, B, or both A and B". More specifically, the condition "A or B" is satisfied by either A being true (or present) and B being false (or absent), A being false (or absent) and B being true (or present), or both A and B being true (or present).

With the spread of the application range of the secondary battery, the requirements for the performance of the secondary battery such as energy density are gradually promoted. The silicon-based material which has a high capacity is the cathode electrode material suitable for high energy density batteries. However, the silicon-based material has a large volume expansion rate during charge and discharge, resulting in poor cycle performance of the battery, and the solid electrolyte interface film (SEI film) on the surface of the silicon-based material will be repeatedly regenerated with the expansion of the silicon-based material, which increases the internal resistance and decreases the capacity retention rate of the battery.

Based on this, the present application provides a secondary battery, including a negative electrode plate and an electrolyte solution, where the negative electrode plate includes a silicon-carbon composite material having a three-dimensional network cross-linked pore structure, and the electrolyte solution includes a cyclic carbonate compound, the cyclic carbonate compound being shown in formula I,

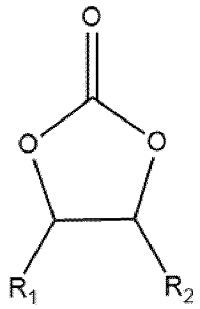
formula I

where $R_1$ and $R_2$ are each independently selected from H and $C_1$ to $C_6$ alkyl.

In the present application, the three-dimensional network cross-linked pore structure generally refers to a structure in which two or more pores are present in communication with each other or staggered with share a pore volume with each other in a silicon-carbon composite material, particularly in a pore structure formed by carbon matrix particles.

The pore structure of the silicon-carbon composite material may be tested by using equipment and methods known in the art. For example, the pore structure may be tested by using a scanning electron microscope (for example, ZEISS Sigma 300). As an example, the pore structure may be tested according to the following steps: the cathode electrode plate containing the silicon-carbon composite material is cut into a sample to be tested of a certain size (for example, 6 mm×6 mm) first, the sample to be tested is sandwiched between two electrically and thermally conductive sheets (for example, copper foils), the sample to be tested and the sheets may be adhered and fixed with an adhesive (for example, a double-sided tape), the sample to be tested is pressed by a flat iron block of a certain mass (for example, about 400 g) for a certain time (for example, 1 h), so that the gap between the sample to be tested and the copper foil is as small as possible, and then the edge of the sample to be tested is cut with a pair of scissors and is adhered to a sample stage with an electrically conductive adhesive, and the sample slightly protrudes from the edge of the sample stage. The sample stage is then loaded into a sample holder and locked in place, an argon ion section polisher (for example, IB-19500CP) is powered on and vacuumizing is performed (for example, 10-4 Pa), an argon flow (for example, 0.15 MPa) and a voltage (for example, 8 KV) and polishing time (for example, 2 h) are set, the sample stage is adjusted to a rocking mode to start polishing, and after the polishing is finished, an ion polishing profile (CP) picture of the sample to be tested is obtained using a scanning electron microscope (for example, ZEISS Sigma 300).

The silicon-carbon composite material having a three-dimensional network cross-linked pore structure has a stable porous framework and good mechanical strength, and can effectively reduce the volume change of silicon before and after charging and discharging while loading a high silicon content. Meanwhile, the cyclic carbonate compound coordinated in the electrolyte solution can be used to construct an interface component on the surface of the silicon-carbon composite material to form a stable interface film, thereby reducing the internal resistance of the battery, and improving the cycle performance.

In some embodiments, the pore volume of the silicon-carbon composite material per unit mass is Vm, with a unit of $cm^3/g$, in the electrolyte solution, the mass proportion of the cyclic carbonate compound based on the total mass of the electrolyte solution is EL, with a unit of g/g, and a ratio EL: Vm between the pore volume Vm of the silicon-carbon composite and the mass proportion EL of the cyclic carbonate compound in the electrolyte solution is 0.02-5, and optionally 0.05-3.5.

In some embodiments, the ratio EL: Vm between the pore volume Vm of the silicon-carbon composite and the mass proportion EL of the cyclic carbonate compound in the electrolyte solution may be selected from 0.02, 0.03, 0.04, 0.05, 0.06, 0.07, 0.08, 0.09, 0.1, 0.2, 0.3, 0.4, 0.5, 0.6, 0.7, 0.8, 0.9, 1, 1.5, 2, 2.5, 3, 3.5, 4, 4.5, or 5.

The pore volume Vm of the silicon-carbon composite material may be calculated by the following formula: $\mathrm{Vm} = \frac{1}{\rho\ \mathrm{true}} \times \frac{\alpha}{1-\alpha}$, where $\rho_{true}$ represents the true density of the silicon-carbon composite material, and $\alpha$ represents the porosity of the silicon-carbon composite material. Porosity refers to the ratio of the volume of pores within the particles to the total volume of the carbon matrix particles. Porosity may be measured by gas displacement according to GB/T24586. Porosity W=(L1-L2)/L1* 100%, where L1 is the apparent volume of the sample and L2 is the true volume of the sample. True density is meaning known in the art that refers to the actual mass of a solid substance per unit volume of a material in an absolutely dense state, i.e., the density after removal of voids within the material or voids between particles; and true density may be tested by using instruments and methods known in the art. For example, the test method may refer to GB/T 24586-2009, and the test instrument may be a true density tester. As an example, the true density may be tested according to the following steps: a clean dry sample cup is taken and placed on a balance, the balance is reset, a certain amount of powder sample is added into the sample cup (for example, the sample may account for 1/2 of the volume of the sample cup), the mass of the sample taken is recorded, the sample cup loading the sample is placed in the true density tester for close testing, helium is introduced, the pressure of the gas in the sample chamber and the expansion chamber is detected, and the true volume is calculated according to Bohr's law, and thus the true density is calculated.

When the ratio EL: Vm between the pore volume Vm of the composite and the mass proportion EL of the cyclic carbonate compound in the electrolyte solution satisfies the above range, the amount of the cyclic carbonate compound added and the pore volume Vm of the silicon-carbon composite can coordinate with each other to improve the cycle capacity retention ratio of the battery. Moreover, the addition of the cyclic carbonate in an appropriate mass content can also reduce decomposition gas generation due to excessive addition of the cyclic carbonate or preferential decomposition gas generation of other solvents due to insufficient addition of the cyclic carbonate, reduce volume expansion due to gas generation, and further improve the cycle performance.

In some embodiments, the pore volume Vm of the silicon-carbon composite material per unit mass is 0.01-0.3 $cm^3/g$, and optionally 0.02-0.15 $cm^3/g$.

In some embodiments, the pore volume Vm of the silicon-carbon composite material may optionally be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, or 0.3.

When the pore volume of the silicon-carbon composite material satisfies the above range, it is possible to ensure both the mechanical strength and the loading capacity of silicon, to improve the cycle performance of the battery by effective coordinating with the cyclic carbonate compound in the electrolytic solution, and to avoid the gas generation phenomenon caused by excessive addition of the cyclic carbonate.

In some embodiments, in the electrolyte solution, a mass proportion of the cyclic carbonate compound based on a total mass of the electrolyte solution is EL, with a unit of g/g, and a specific surface area of the silicon-carbon composite is SSA, EL: SSA is 0.00001-0.15, and optionally 0.00015-0.05.

In some embodiments, the ratio EL: SSA between the mass proportion of the cyclic carbonate compound in the electrolyte solution and the specific surface area SSA of the silicon-carbon composite may optionally be 0.00015, 0.00016, 0.00017, 0.00018, 0.00019, 0.0002, 0.0003, 0.0004, 0.0005, 0.0006, 0.0007, 0.0008, 0.0009, 0.001, 0.005, 0.006, 0.007, 0.008, 0.009, 0.01, 0.02, 0.03, 0.04, or 0.05.

In the present application, the specific surface area SSA is meaning known in the art, and usually, the surface area is represented by a unit of $m^2/g$ and may be tested by methods and instruments known in the art. For example, with reference to GB/T 19587 2017, the specific surface area may be obtained by using a specific surface area testing method with inert gas (for example, nitrogen) adsorption and using the BET (Brunauer Emmett Teller) method for calculation, where the specific surface area testing method with nitrogen adsorption may be performed by a Tri-Star 3020 specific surface area pore size analysis tester from Micromeritics, USA.

When the ratio EL: SSA between the mass proportion of the cyclic carbonate compound in the electrolyte solution and the specific surface area SSA of the silicon-carbon composite material satisfies the above range, the cyclic carbonate compound may be effectively embedded into the pore structure of the silicon-carbon composite material to sufficiently contact with the silicon-carbon composite material to form a uniform interface film, so as to improve the interface stability, so that the internal resistance of the battery is reduced, and the cycle stability of the battery is improved; and moreover, the addition of the cyclic carbonate in an appropriate mass content can also reduce decomposition gas generation due to excessive addition of the cyclic carbonate or preferential decomposition gas generation of other solvents due to insufficient addition of the cyclic carbonate, reduce volume expansion due to gas generation, and further improve the cycle performance.

In some embodiments, the specific surface area SSA of the silicon-carbon composite material is 2-10 $m^2$/g, and optionally 3-7 $m^2$/g.

In some embodiments, the specific surface area SSA of the silicon-carbon composite material may optionally be 2 $m^2$/g, 3 $m^2$/g, 4 $m^2$/g, 5 $m^2$/g, 6 $m^2$/g, 7 $m^2$/g, 8 $m^2$/g, 9 $m^2$/g or 10 $m^2$/g, or a range formed by the above any two numerical values.

When the specific surface area SSA of the silicon-carbon composite material satisfies the above range, the specific surface area of the silicon-carbon composite material is large, and the dynamic performance of the material is good.

In some embodiments, a total pore volume of pores having a pore diameter less than or equal to 100 nm in the silicon-carbon composite material is V1 $cm^3$/g, and in the electrolyte solution, a mass ratio of the cyclic carbonate compound based on the total mass of the electrolyte solution is EL, with a unit of g/g, and EL: V1 is 0.05-50, and optionally 1-30.

A pore volume testing method for different pore sizes may refer to GB/T 19587-2004, and the pore volume is tested by mesoporous pore size distribution test BJH (Barret joyner Halenda). In a micro-mesoporous mode, the pore volume is tested by a gas adsorption method and adsorption branch data is selected. The total pore volume V1 of pores having a pore size less than or equal to 100 nm is tested and counted.

In some embodiments, the ratio EL: V1 between the mass proportion EL of the cyclic carbonate compound in the electrolyte solution and the total pore volume V1 of pores having a pore diameter less than or equal to 100 nm in the silicon-carbon composite material may optionally be 0.05, 0.1, 0.2, 0.3, 0.4, 0.5, 0.6, 0.7, 0.8, 0.9, 1, 2, 3, 4, 5, 6, 7, 8, 9, 10, 15, 20, 25, 30, 35, 40, 45, or 50.

When the ratio EL: V1 between the mass proportion EL of the cyclic carbonate compound in the electrolyte solution and the total pore volume V1 of pores having a pore diameter greater than or equal to 100 nm in the silicon-carbon composite material is within the above range, the cyclic carbonate compound may easily enter the pore structure of the silicon-carbon composite material, and coordinate with the pore structure to further increase the migration rate of ions in the electrode active material, thereby improving the cycle performance of the battery.

In some embodiments, the V1 of the silicon-carbon composite material is $\geq$0.001 $cm^3$/g, and optionally 0.005-0.01 $cm^3$/g.

In some embodiments, V1 of the silicon-carbon composite may optionally be 0.001, 0.002, 0.003, 0.004, 0.005, 0.006, 0.007, 0.008, 0.009, or 0.01 $cm^3$/g.

When V1 of the silicon-carbon composite material is within the above range, the silicon-carbon composite material can effectively coordinate with the cyclic carbonate compound in the electrolyte solution to improve the cycle performance of the battery, and the gas generation phenomenon due to the excessive addition content of the cyclic carbonate can be avoided.

In some embodiments, the cyclic carbonate compound is selected from at least one of ethylene carbonate, propylene carbonate, 1,2-butylene carbonate, and 4,5-dimethyl ethylene carbonate.

The above cyclic carbonate compound has a high dielectric constant and a high ionic conductivity, and can be used to construct an interface component to form a stable interface film, so as to improve the cycle performance of the battery.

In some embodiments, the silicon-carbon composite includes a carbon matrix having a three-dimensional network cross-linked pore structure and silicon nanoparticles at least partially embedded into the three-dimensional network cross-linked pore structure of the carbon matrix.

The carbon matrix particles of the present application have a stable porous framework structure, have a strong supporting ability, exhibit a high stress ability, and have excellent mechanical properties and electrical conductivity, and the carbon matrix particles include a three-dimensional network cross-linked pore structure, have a large space for embedding silicon-based nanoparticles, may be used for storing silicon in a large amount, and effectively increase the loading capacity of silicon in the silicon-carbon composite material. After the carbon matrix particles are compounded with the silicon-based nanoparticles, the electrical conductivity of the silicon-carbon composite material may be improved, the volume effect of silicon in the process of lithium deintercalation and intercalation is alleviated, and the change in stress of the silicon-based nanoparticles can be sufficiently withstood, the structural stability of the silicon-carbon composite

material is ensured, and the cycle performance of the battery is further improved. Therefore, when the silicon-carbon composite material provided by the present application is applied to a secondary battery, the cycle performance and energy density of the secondary battery can be synchronously improved.

In some embodiments, the mass ratio of the silicon nanoparticles in the silicon-carbon composite material is greater than or equal to 40%, and optionally 40-60%.

In some embodiments, the mass ratio of silicon nanoparticles in the silicon-carbon composite may optionally be 40%, 45%, 50%, 55%, or 60%.

The mass of the silicon nanoparticles in the silicon-carbon composite material may be tested by using methods and devices known in the art, for example, with reference to an EPA 6010D-2014 standard, and specifically, the mass may be tested by using ICP-OES (Elemental Analysis-Inductively Coupled Plasma Optical Emission Spectroscopy), where a solid to be tested is first dissolved in a strong acid to form a liquid, the liquid is then introduced into an ICP light source by means of atomization, and the gaseous atoms to be tested are ionized and excited in a strong magnetic field and then returned from an excited state to a ground state, and energy is released in the above process and recorded as different characteristic spectral lines to perform quantitative analysis of trace elements.

The negative electrode material used in the secondary battery of the present application realizes a high loading capacity of silicon nanoparticles in the negative electrode material by using a carbon-based material having a three-dimensional network cross-linked pore structure, so that the silicon-carbon composite material has a high capacity, which can further increase the energy density of the battery.

In some embodiments, the silicon nanoparticles include one or more of a silicon oxide compound, amorphous silicon, crystalline silicon, and a silicon-carbon composite.

In some embodiments, the carbon matrix includes one or more of graphite, soft carbon, and hard carbon.

In some embodiments, the total volume of pores having a pore diameter greater than 100 nm in the carbon matrix particles is denoted by Vc1 $cm^3/g$, the total volume of pores having a pore diameter less than 100 nm in the carbon matrix particles is denoted by Vc2 $cm^3/g$, and the carbon matrix particles satisfy $1<Vc2/Vc1\leq 30$, and optionally $3\leq Vc2/Vc1\leq 25$.

By regulating the total pore volume proportion of pores having a specific size in the porous carbon matrix particles, the pore size distribution of the carbon matrix particles may be moderate, which can not only guarantee a high silicon loading capacity of the silicon-carbon composite material and but also guarantee the mechanical strength of the silicon-carbon composite material, and large and small pore sizes can effectively coordinate with the molecular structure of the electrolyte solution to improve the ion transport rate in the electrolyte solution, so as to optimize the dynamic performance.

In some embodiments, the ratio of a powder compaction density P11 $g/cm^3$ of the silicon-carbon composite material tested after powder compaction for one time under an acting force of 20,000 N to a powder compaction density P21 $g/cm^3$ of the silicon-carbon composite material tested after powder compaction for 20 times under an acting force of 20,000 N satisfies $1.00<P21/P11\leq 1.20$, and optionally $1.02\leq P21/P11\leq 1.10$.

When the ratio of P21/P11 satisfies the above range, the silicon-carbon composite material has better compression resistance while having a higher gram capacity, and the structural stability of the negative electrode film layer is improved, so that the secondary battery containing the material has better cycle performance while having a higher energy density.

In some embodiments, the powder compaction density P11 $g/cm^3$ of the silicon-carbon composite material tested after powder compaction for one time under an acting force of 20,000 N satisfies $1.10\leq P11\leq 1.40$, and optionally $1.12\leq P11\leq 1.35$.

When the powder compaction density P11 $g/cm^3$ of the silicon-carbon composite material tested after powder compaction for one time under an acting force of 20,000 N satisfies the above range, the negative electrode film layer has a higher compaction density, so that the secondary battery has a higher energy density.

In some embodiments, the secondary battery includes a negative electrode plate. The negative electrode plate includes a negative electrode current collector and a negative electrode film layer disposed on at least one surface of the negative electrode current collector. The negative electrode film layer includes a negative electrode active material.

As an example, the negative electrode current collector has two surfaces opposite in its own thickness direction, and the negative electrode film layer is disposed on either one or both of the two opposite surfaces of the negative electrode current collector.

In some embodiments, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode film layer optionally further includes a binder. The binder may be selected from at least one of styrene-butadiene rubber (SBR), polyacrylic acid (PAA), sodium polyacrylate (PAAS),

polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

The secondary battery includes a positive electrode plate. The positive electrode plate includes a positive electrode current collector and a positive electrode film layer disposed on at least one surface of the positive electrode current collector. The positive electrode film layer includes the positive electrode active material according to the first aspect of the present application.

As an example, the positive electrode current collector has two surfaces opposed in its own thickness direction, and the positive electrode film layer is provided on either one or both of the two opposed surfaces of the positive electrode current collector.

In some embodiments, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some embodiments, the positive electrode active material may be a positive electrode active material for a battery known in the art. As an example, the positive electrode active material may include at least one of olivine-structured lithium-containing phosphate, lithium-transition metal oxide, and their respective modifying compounds. However, the present application is not limited to these materials, and other conventional materials that can be used as a positive electrode active material of a battery may also be used. These positive electrode active materials may be used alone or in combination of two or more thereof. Examples of the lithium transition metal oxide may include, but are not limited to, at least one of lithium cobalt oxide (e.g., $LiCoO_2$), lithium nickel oxide (for example, $LiNiO_2$), lithium manganese oxide (e.g., $LiMnO_2$ or $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also simply referred to as $NCM_{333}$), $LiNi_{0.5}Co_{0.2}Mn_{0.3}O_2$ (also simply referred to as $NCM_{523}$), $LiNi_{0.5}Co_{0.25}Mn_{0.25}O_2$ (also simply referred to as $NCM_{211}$), $LiNi_{0.6}Co_{0.2}Mn_{0.2}O_2$ (also simply referred to as $NCM_{622}$), $LiNi_{0.8}Co_{0.1}Mn_{0.1}O_2$ (also simply referred to as $NCM_{811}$)), lithium nickel cobalt aluminum oxide (e.g., $LiNi_{0.85}Co_{0.15}Al_{0.05}O_2$), modifying compounds thereof, and the like. Examples of the olivine-structured lithium-containing phosphate may include, but are not limited to, at least one of lithium iron phosphate (e.g., $LiFePO_4$ (which may also be simply referred to as LFP)), a composite of lithium iron phosphate and carbon, lithium manganese phosphate (e.g., $LiMnPO_4$), a composite material of lithium manganese phosphate and carbon, lithium ferro-manganese phosphate, and a composite material of lithium ferro-manganese phosphate and carbon.

In some embodiments, the positive active material is a nickel-rich material, and the molar proportion of nickel element in the positive active material transition metal is greater than 85%.

In some implementations, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode tab may be prepared by dispersing the above components for preparing a positive electrode tab, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

In some embodiments, the secondary battery further includes a separator. The type of the separator is not particularly limited in this application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the secondary battery includes at least one of a lithium ion battery, a sodium ion battery, a magnesium ion battery, and a potassium ion battery.

In one embodiment of the present application, provided is an electric device, including the secondary battery according to any embodiment.

The shape of the secondary battery is not limited in this application, and may be a cylindrical shape, a square shape, or any other shape. For example, FIG. 1 shows a secondary battery 1 of a square structure as an example.

In some embodiments, referring to FIG. 2, the outer package may include a housing 11 and a cover plate 13. The housing 11 may include a bottom plate and side plates connected to the bottom plate, and the bottom plate and the side plates may define an accommodating chamber. The housing 11 has an opening communicating with the accommodation chamber, and the cover plate 13 can cover the opening to close the accommodation chamber. The positive electrode plate, the negative electrode plate, and the separator may be formed into the electrode assembly 12 through a winding process or a lamination process. The electrode assembly 12 is enclosed within the accommodation chamber. The electrolyte solution is impregnated into the electrode assembly 12. There may be one or a plurality of electrode assemblies 12 included in the secondary battery 1, and the number may be selected by those skilled in the art according to specific practical requirements.

The electric device includes the secondary battery provided by the present application. The secondary battery may be used as a power supply for the electric device, or as an energy storage unit for the electric device. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

FIG. 3 shows an electric device as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

## Examples

Embodiments of the present application are described below. The embodiments described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

I. Secondary battery

Example 1

(1) Preparation of a silicon-carbon composite material

A gas containing a silicon precursor was provided to carbon matrix particles having a three-dimensional network cross-linked pore structure; and silicon nanoparticles attached to the carbon matrix particles were generated from the silicon precursor by chemical vapor deposition to obtain a silicon-carbon composite material. The silicon precursor is silane, and the carbon matrix is hard carbon.

The total volume of pores having a pore size less than or equal to 100 nm in the carbon matrix particles is denoted by Vc2 $cm^3/g$, the total volume of pores having a pore diameter greater than 100 nm in the carbon substrate particles is denoted by Vc1 $cm^3/g$, and Vc2/Vc1 is 10.5. The powder compaction density P11 of the silicon-carbon composite material tested after powder compaction for one time under an acting force of 20,000 N is 1.11 $g/cm^3$, and the ratio of the powder compaction densities P21 and P11 of the silicon-carbon composite material tested after powder compaction for 20 times under an acting force of 20,000 N is 1.02.

(2). Preparation of a negative electrode plate

A negative electrode active material (a silicon-oxygen composite material), conductive carbon black, a thickener

sodium carboxymethyl cellulose (CMC), and a binder styrene-butadiene rubber emulsion (SBR) were sufficiently stirred and mixed in an appropriate amount of deionized water at a weight ratio of 96.5: 1.0: 1.0: 1.5 to form a uniform negative electrode slurry; and the slurry was coated to a negative current collector, followed by the steps such as drying to obtain a negative electrode plate.

(3). Preparation of a positive electrode plate

An 8 μm thick aluminum foil was used as a positive electrode current collector. A positive electrode active material $LiNi_{0.8}Co_{0.1}Mn_{0.1}O_2$ (NCM811), conductive carbon black, and a binder polyvinylidene fluoride (PVDF) were dissolved in a solvent N-methylpyrrolidone (NMP) at a weight ratio of 93: 2: 5 and were sufficiently stirred and uniformly mixed to obtain a positive electrode slurry; and the positive electrode slurry was coated to the surface of a positive electrode current collector, followed by drying, cold pressing, and slitting to obtain a positive electrode plate.

(4). Preparation of an electrolyte solution

Fluoroethylene carbonate (FEC), ethyl methyl carbonate (EMC), and diethyl carbonate (DEC) were mixed at a volume ratio of 1: 3: 1 to obtain an organic solvent, then a sufficiently dried lithium salt LiPF6 was dissolved in the mixed organic solvent to prepare an electrolyte solution with a concentration of 1 mol/L, and then 5wt% ethylene carbonate was added to be uniformly mixed.

(5). Separator

A polyethylene film was used as a separator.

(6). Preparation of a battery

The positive electrode plate, the separator, and the negative electrode plate were stacked in order, where the separator was located between the positive and negative electrode plates to play a separating role, and the positive electrode plate, the separator, and the negative electrode plate were wound to obtain a bare cell, a tab was welded to the bare cell, and the bare cell was enclosed in an aluminum case and baked at 80 °C to remove water, and then the electrolyte solution was injected and the aluminum case was sealed to obtain an uncharged battery. The uncharged battery was further subjected to steps such as standing, hot and cold pressing, chemical forming, shaping, and capacity testing in order to obtain the lithium-ion battery product of Example 1.

Examples 2-4

The methods for preparing the battery in Examples 2-4 are similar to the method for preparing the battery in Example 1. But the type of cyclic carbonate is adjusted, and the specific parameters are shown in Table 1.

Examples 5-8

The methods for preparing the battery in Examples 5-8 are similar to the method for preparing the battery in Example 1. But the added content of ethylene carbonate is adjusted, and the specific parameters are shown in Table 1.

Examples 9-12

The methods for preparing the battery in Examples 9-12 are similar to the method for preparing the battery in Example 1. But the mass proportion EL of the cyclic carbonate compound in the electrolyte solution and the proportions of large and small pores of the three-dimensional crosslinked pore structure are adjusted, and the specific parameters are shown in Table 1.

Comparative example 1

Comparative example 1 is substantially the same as Example 1. But the cyclic carbonate compound is not added into the electrolyte solution.

Comparative example 2

Comparative example 2 is substantially the same as Example 1. But the pore structure of the carbon matrix particles in Comparative example 2 is a honeycomb pore structure.

Comparative example 3

Comparative example 3 is substantially the same as Example 2. But the pore structure of the carbon matrix particles in Comparative example 3 is a honeycomb pore structure.

**II. Test Method**

1. Silicon-carbon composite material

1) Structural characterization of the silicon-carbon composite material

The pore structure of the silicon-carbon composite material may be tested by using equipment and methods known in the art. For example, the pore structure may be tested by using a scanning electron microscope (for example, ZEISS Sigma 300). As an example, the pore structure may be tested according to the following steps: the cathode electrode plate containing the silicon-carbon composite material was cut into a sample to be tested of a certain size (for example, 6 mm×6 mm) first, the sample to be tested was sandwiched between two electrically and thermally conductive sheets (for example, copper foils), the sample to be tested and the sheets might be adhered and fixed with an adhesive (for example, a double-sided tape), the sample to be tested was pressed by a flat iron block of a certain mass (for example, about 400 g) for a certain time (for example, 1 h), so that the gap between the sample to be tested and the copper foil was as small as possible, and then the edge of the sample to be tested was cut with a pair of scissors and was adhered to a sample stage with an electrically conductive adhesive, and the sample slightly protruded from the edge of the sample stage. The sample stage was then loaded into a sample holder and locked in place, an argon ion section polisher (for example, IB-19500CP) was powered on and vacuumizing was performed (for example, 10-4 Pa), an argon flow (for example, 0.15 MPa) and a voltage (for example, 8 KV) and polishing time (for example, 2 h) were set, the sample stage was adjusted to a rocking mode to start polishing, and after the polishing was finished, an ion polishing profile (CP) picture of the sample to be tested was obtained using a scanning electron microscope (for example, ZEISS Sigma 300).

2) Porosity of the silicon-carbon composite material

The negative electrode plate was taken out after the battery was disassembled, the powder was scraped off, and the binder was removed after high-temperature ablation to obtain a silicon-carbon composite material sample, and the porosity was measured by the gas displacement method according to GB/T24586. Porosity P=(V1-V2)/V1*100%, where L1 is the apparent volume of the sample and L2 is the true volume of the sample.

3) Specific surface area SSA of the silicon-carbon composite material

The specific surface area was measured by a gas adsorption method according to a test standard of GB/T 19587-2017, specifically as follows: a silicon-carbon composite material was taken as a sample, a sample tube was immersed in liquid nitrogen at -196°C, the adsorption amounts of nitrogen gas on the solid surface at different pressures were determined at a relative pressure of 0.05-0.30, and the adsorption amount of a monomolecular layer of the sample was solved based on the BET multilayer adsorption theory and a formula thereof, and thus, the specific surface area of the negative electrode active material was calculated.

A calculation formula of BET is as follows:

$$\frac{P/P_0}{n_a(1-P/P_0)} = \frac{1}{n_m C} + \frac{C-1}{n_m C} \cdot \frac{P}{P_0}$$

where $n_a$ is the amount of adsorbed gas, with a unit of mol/g, $p/p_0$ is the relative pressure, nm is the adsorption amount of the monomolecular layer, and C represents a revision parameter, used to limit the number of adsorbed layers on the adsorbent surface.

4) Pore size of the silicon-carbon composite material

The pore size was measured by the gas adsorption method according to a test standard of GB/T19587-2017&GB/T21650.2-2008, specifically as follows: the silicon-carbon composite material was taken as a sample, the sample tube was immersed in liquid nitrogen at -196°C, nitrogen gas was adsorbed on a material to be tested at a relative pressure of 0-1, and the pore size distribution of the porous material was characterized based on a relational graph of the volume of each pore size and the corresponding partial pressure.

5) True density of the silicon-carbon composite material

With reference to GB/T 24586 2009, the test instrument may be a true density tester. As an example, the true density may be tested according to the following steps: a clean dry silicon-carbon composite material sample cup was taken and placed on a balance, the balance was reset, a certain amount of powder sample was added into the sample cup (for example, the sample might account for 1/2 of the volume of the sample cup), the mass of the sample taken was recorded, the sample cup loading the sample was placed in the true density 25-degree tester for close testing, helium was introduced, the pressure of the gas in the sample chamber and the expansion chamber was detected, and the true volume was calculated according to Bohr's law, and thus the true density was calculated.

6) Characterization of silicon and carbon element distribution in the silicon-carbon composite material

By adopting ion polishing section elemental analysis of spectrometry, elemental distribution on sections of the particles was tested according to a test standard of GB-T17359-2012.

2. Battery performance

1) Cycle capacity retention rate

At 25°C, the secondary batteries prepared in Examples and Comparative examples were subjected to the following one charge-discharge cycle: the batteries were charged with a constant current at a rate of 0.5 C to a charge cut-off voltage 4.25V, then were charged at a constant voltage till the current was ≤0.05C, were left stand for 5 min, then were discharged at a constant current at a rate of 0.33 C to a discharge cut-off voltage V2, and were left stand for 5 min. The batteries were subjected to the cyclic charge-discharge test according to this method, and the capacity retention rates of the lithium ion batteries after 800 cycles were calculated.

2) Gas generation rate test

At constant temperature, the secondary batteries prepared in Examples and Comparative examples were charged with a constant current at a rate of 0.33 C to the charge cut-off voltage 4.25V, then charged at a constant voltage till the current was ≤0.05C, and left stand for 20 min. The batteries were then taken out after 90 days of storage at 60°C to test the gas production amount. The gas generation amount was divided by the battery capacity as the gas generation amount per unit capacity.

3) Internal Resistance of the battery

At 25°C, the lithium ion batteries prepared in Examples and Comparative examples and the lithium ion batteries after 800 cycles at 25°C were charged with a constant current of 1C to 4.25V; and then, the batteries were charged at a constant voltage of 4.25V till the current was less than 0.05C, and then discharged at 1C for 30 min, so that the electric quantities of the batteries were adjusted to 50%SOC. Then, the positive and negative gauge pens of a TH2523A AC internal resistance tester were in contact with the positive and negative electrodes of the batteries, respectively, and the internal resistance values of the batteries were read by the internal resistance tester and recorded as the initial battery internal resistance (m Ω) and the battery internal resistance (m Ω) after 800 cycles, respectively.

III. Analysis of test results of Examples and Comparative examples

The secondary batteries in Examples and Comparative examples were each prepared according to the above method, and the parameters were measured, and the results were shown in Table 1 below.

Table 1

| No. | Negative electrode active material | Fluorine-free cyclic carbonate | EL/Vm | EL/SSA | EL/V1 | Capacity retention after 800 cycles at 25°C | Initial internal resistance (m Ω) of battery | Internal resistance of battery after 800 cycles (m Ω) | Gas generation amount (mL/Ah) stored for 90 days at 60°C |
|---|---|---|---|---|---|---|---|---|---|
| Example 1 | Three-dimensional network crosslinked structure | Ethylene carbonate | 2 | 0.01 | 5 | 50% | 1325 | 2110 | 0.8 |
| Example 2 | Three-dimensional network crosslinked structure | Propylene carbonate | 2 | 0.01 | 5 | 49% | 1409 | 2219 | 0,9 |
| Example 3 | Three-dimensional network crosslinked structure | 1,2-butanediol carbonate | 2 | 0.01 | 5 | 47% | 1485 | 2357 | 1,1 |
| Example 4 | Three-dimensional network crosslinked structure | 4,5-dimethylet hylene carbonate | 2 | 0.01 | 5 | 44% | 1491 | 2465 | 1,2 |
| Example 5 | Three-dimensional network crosslinked structure | Ethylene carbonate | 0.05 | 0,00025 | 0,125 | 18% | 1517 | 2715 | 4,5 |
| Example 6 | Three-dimensional network crosslinked structure | Ethylene carbonate | 3,5 | 0,0175 | 8,75 | 19% | 1498 | 3045 | 4,7 |
| Example 7 | Three-dimensional network crosslinked structure | Ethylene carbonate | 0.02 | 0.0001 | 0.05 | 13% | 1487 | 2993 | 5 |

(continued)

| No. | Negative electrode active material | Fluorine-free cyclic carbonate | EL/Vm | EL/SSA | EL/V1 | Capacity retention after 800 cycles at 25°C | Initial internal resistance (m Ω) of battery | Internal resistance of battery after 800 cycles (m Ω) | Gas generation amount (mL/Ah) stored for 90 days at 60°C |
|---|---|---|---|---|---|---|---|---|---|
| Example 8 | Three-dimensional network crosslinked structure | Ethylene carbonate | 5 | 0,025 | 12,5 | 14% | 1507 | 3219 | 5,1 |
| Example 9 | Three-dimensional network crosslinked structure | Ethylene carbonate | 2 | 0,00015 | 1 | 27% | 1410 | 2587 | 1,7 |
| Example 10 | Three-dimensional network crosslinked structure | Ethylene carbonate | 2 | 0.05 | 30 | 40% | 1421 | 2694 | 2 |
| Example 11 | Three-dimensional network crosslinked structure | Ethylene carbonate | 2 | 0.00001 | 0.05 | 24% | 1425 | 2671 | 2.4 |
| Example 12 | Three-dimensional network crosslinked structure | Ethylene carbonate | 2 | 0.15 | 50 | 38% | 1432 | 2731 | 2,8 |
| Comparative example 1 | Three-dimensional network crosslinked structure | / | / | / | / | 10% | 1555 | 3553 | 6 |
| Comparative example 2 | Honeycomb pore structure | Ethylene carbonate | 2 | 0.01 | 5 | 5% | 1654 | 3943 | 7 |
| Comparative example 3 | Honeycomb pore structure | Propylene carbonate | 2 | 0.01 | 5 | 4% | 1653 | 3945 | 8 |

It may be known from the results of Table 1 that the negative electrode active materials of the batteries in Examples 1-12 are the silicon-carbon composite material having a three-dimensional network cross-linked pore structure and the electrolyte solution included the cyclic carbonate compound. Compared with the battery in Comparative example 1 where the negative electrode active material is the three-dimensional network cross-linked pore structure and the electrolyte solution does not include the cyclic carbonate compound and the batteries in Comparative examples 2-3 where the negative electrode active material is the three-dimensional network cross-linked pore structure and the electrolyte solution includes the cyclic carbonate compound, the batteries in Examples 1-12 show more excellent cycle capacity retention rates, lower direct current impedance and lower gas generation amounts.

The negative electrodes in the comparative examples are the silicon carbon composite material having a honeycomb pore structure, silicon particles are unlikely to be deposited inside the honeycomb pore structure, and therefore, the mass content of silicon particles in the silicon carbon composite material having a honeycomb pore structure which is low is only 7%, and the energy density of the battery is low. In addition, the silicon element is concentrated and distributed on the surface of the composite material, and it is difficult for the carbon matrix to play a role of restricting the expansion of the silicon-based particles, and the cycle performance of the battery is poor.

It may be seen by comparing Examples 5-6 with Examples 7-8 that controlling the ratio EL: Vm between the pore volume Vm of the silicon-carbon composite material and the mass proportion EL of the cyclic carbonate compound in the electrolyte solution within the range of 0.05-3.5 can further improve the cycle capacity retention rate of the batteries and reduce the direct current impedance and gas generation amount.

It may be seen from Examples 9-12 that when the ratio EL: SSA between the mass proportion of the cyclic carbonate compound in the electrolyte solution and the specific surface area SSA of the silicon-carbon composite material is further controlled to be 0.00015-0.05 or the ratio EL: V1 between the mass proportion EL of the cyclic carbonate compound in the electrolyte solution and the total pore volume V1 of pores having a pore diameter less than or equal to 100 nm in the silicon-carbon composite material is further controlled to be 1-30, the cycle performance of the secondary battery is further improved.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

1. A secondary battery, comprising:

   a negative electrode plate, comprising a silicon-carbon composite material having a three dimensional network cross-linked pore structure; and
   an electrolyte solution, comprising a cyclic carbonate compound shown in formula I,

   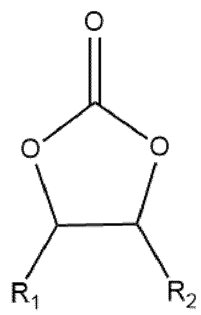
   formula I

   wherein $R_1$ and $R_2$ each independently comprise at least one of H and $C_1$-$C_6$ alkyl.

2. The secondary battery according to claim 1, wherein

   a pore volume of the silicon-carbon composite material per unit mass is Vm, with a unit of $cm^3/g$;
   in the electrolyte solution, a mass ratio of the cyclic carbonate compound based on a total mass of the electrolyte

solution is EL, with a unit of g/g, and
EL: Vm is 0.02-5, and optionally 0.05-3.5.

3. The secondary battery according to claim 2, wherein the pore volume Vm of the silicon-carbon composite material per unit mass is 0.01-0.3 $cm^3/g$, and optionally 0.02-0.15 $cm^3/g$.

4. The secondary battery according to any one of claims 1 to 3, wherein

in the electrolyte solution, the mass ratio of the cyclic carbonate compound based on the total mass of the electrolyte solution is EL, with a unit of g/g, and
a specific surface area of the silicon-carbon composite material is SSA, and
EL: SSA is 0.00001-0.15, and optionally 0.00015-0.05.

5. The secondary battery according to any one of claims 1 to 4, wherein the specific surface area SSA of the silicon-carbon composite material is 2 -10 $m^2/g$, and optionally 3-7 $m^2/g$.

6. The secondary battery according to any one of claims 1 to 5, wherein a total pore volume of pores having a pore diameter less than or equal to 100 nm in the silicon-carbon composite material is V1 $cm^3/g$, and in the electrolyte solution, the mass ratio of the cyclic carbonate compound based on the total mass of the electrolyte solution is EL, with a unit of g/g, and EL: V1 is 0.05-50, and optionally 1-30.

7. The secondary battery according to any one of claims 1 to 6, wherein the V1 of the silicon-carbon composite material is $\geq$0.001 $cm^3/g$, and optionally 0.005-0.01 $cm^3/g$.

8. The secondary battery according to any one of claims 1 to 7, wherein the cyclic carbonate compound is selected from at least one of ethylene carbonate, propylene carbonate, 1,2-butylene carbonate, and 4,5-dimethyl ethylene carbonate.

9. The secondary battery according to any one of claims 1 to 8, wherein the silicon-carbon composite material comprises a carbon matrix having a three-dimensional network cross-linked pore structure, and silicon nanoparticles at least partially embedded into the three-dimensional network cross-linked pore structure of the carbon matrix.

10. The secondary battery according to claim 9, wherein the mass ratio of the silicon nanoparticles in the silicon-carbon composite material is greater than or equal to 40%, and optionally 40-60%.

11. The secondary battery according to claim 9 or 10, wherein the silicon nanoparticles comprise one or more of a silicon oxide compound, amorphous silicon, crystalline silicon, and a silicon-carbon composite.

12. The secondary battery according to any one of claims 9 to 11, wherein the carbon matrix comprises one or more of graphite, soft carbon, and hard carbon.

13. The secondary battery according to any one of claims 9 to 12, wherein the total volume of pores having a pore diameter greater than 100 nm in the carbon matrix particles is denoted by Vc1 $cm^3/g$, the total volume of pores having a pore diameter less than 100 nm in the carbon matrix particles is denoted by Vc2 $cm^3/g$, and the carbon matrix particles satisfy $1<Vc2/Vc1\leq30$, and optionally $3\leq Vc2/Vc1\leq25$.

14. The secondary battery according to any one of claims 1 to 13, wherein a ratio of a powder compaction density P11 $g/cm^3$ of the silicon-carbon composite material tested after powder compaction for one time under an acting force of 20,000 N to a powder compaction density P21 $g/cm^3$ of the silicon-carbon composite material tested after powder compaction for 20 times under an acting force of 20,000 N satisfies $1.00<P21/P11\leq1.20$, and optionally $1.02\leq P21/P11\leq1.10$.

15. The secondary battery according to any one of claims 1 to 14, wherein the powder compaction density P11 $g/cm^3$ of the silicon-carbon composite material tested after powder compaction for one time under an acting force of 20,000 N satisfies $1.10\leq P11\leq1.40$, and optionally $1.12\leq P11\leq1.35$.

16. The secondary battery according to any one of claims 1 to 15, wherein the secondary battery includes at least one of a lithium ion battery, a sodium ion battery, a magnesium ion battery, and a potassium ion battery.

**17.** An electric device, comprising the secondary battery according to any one of claims 1 to 16.

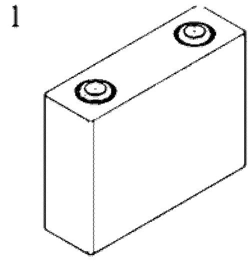


FIG. 1

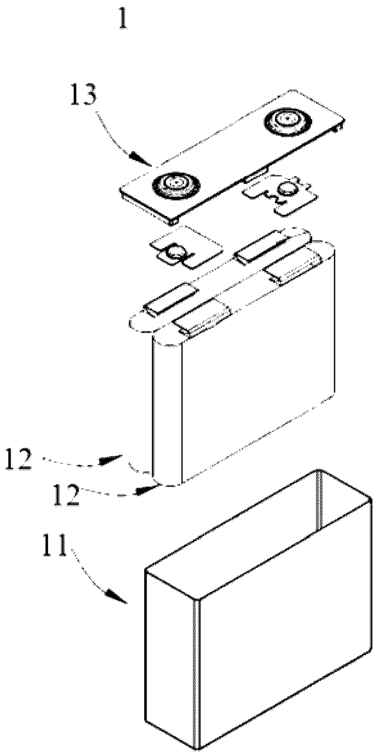


FIG. 2

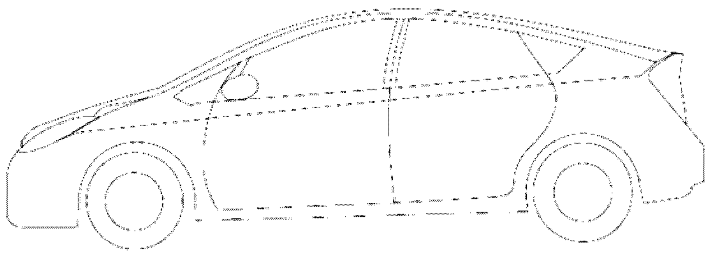

FIG. 3

## INTERNATIONAL SEARCH REPORT

International application No.
**PCT/CN2023/085767**

**A. CLASSIFICATION OF SUBJECT MATTER**

H01M10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 多孔, 网络, 三维, 立体, 硅, 硅氧, 氧化硅, 碳, 炭, 石墨, 石墨烯, 孔径, 空隙, 孔隙, 碳酸乙烯酯, 碳酸丙烯酯, 环状碳酸酯, 3D, Si, SiO, SiOx, SiO2, porous, network, three, dimension, silicon, silica, carbon, graphite, graphene, pore, size, void, ethylene carbonate, propylene carbonate, cyclic carbonate

**C. DOCUMENTS CONSIDERED TO BE RELEVANT**

| Category* | Citation of document, with indication, where appropriate, of the relevant passages | Relevant to claim No. |
|---|---|---|
| X | CN 115244734 A (NEXEON LIMITED) 25 October 2022 (2022-10-25)<br>description, paragraphs 11-231 | 1-17 |
| X | CN 113169307 A (NEXEON LIMITED) 23 July 2021 (2021-07-23)<br>description, paragraphs 12-219 | 1-17 |
| X | KR 20160024325 A (SOGANG UNIVERSITY RESEARCH FOUNDATION) 04 March 2016 (2016-03-04)<br>description, paragraphs 27-78, and figures 1-2 | 1-17 |
| X | WO 2022029423 A1 (NEXEON LIMITED) 10 February 2022 (2022-02-10)<br>description, page 4, line 19 to page 44, line 17 | 1-17 |
| X | CN 115849381 A (ZHEJIANG WYNCA CHEMICAL INDUSTRY GROUP CO., LTD.) 28 March 2023 (2023-03-28)<br>description, paragraphs 8-87 | 1-17 |
| X | CN 107221654 A (UNIVERSITY OF JINAN) 29 September 2017 (2017-09-29)<br>description, paragraphs 5-26, and figure 1 | 1, 9-17 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 July 2023** | **25 December 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

INTERNATIONAL SEARCH REPORT

International application No.
**PCT/CN2023/085767**

**C. DOCUMENTS CONSIDERED TO BE RELEVANT**

| Category* | Citation of document, with indication, where appropriate, of the relevant passages | Relevant to claim No. |
|---|---|---|
| X | CN 108336336 A (HANGU NEW ENERGY TECHNOLOGY (SHANGHAI) CO., LTD.) 27 July 2018 (2018-07-27) description, paragraphs 6-33 | 1, 8-17 |
| X | CN 113178562 A (TIANJIN UNIVERSITY OF SCIENCE AND TECHNOLOGY) 27 July 2021 (2021-07-27) description, paragraphs 8-92 | 1, 8-17 |
| X | CN 113044828 A (KUNSHAN BAOCHUANG NEW ENERGY TECHNOLOGY CO., LTD.) 29 June 2021 (2021-06-29) description, paragraphs 4-109 | 1, 8, 14-17 |
| A | JP 2012043546 A (HITACHI CHEMICAL CO., LTD.) 01 March 2012 (2012-03-01) entire document | 1-17 |

Form PCT/ISA/210 (second sheet) (July 2022)

**INTERNATIONAL SEARCH REPORT**
**Information on patent family members**

International application No.
**PCT/CN2023/085767**

| Patent document cited in search report | | | Publication date (day/month/year) | Patent family member(s) | | | Publication date (day/month/year) |
|---|---|---|---|---|---|---|---|
| CN | 115244734 | A | 25 October 2022 | WO | 2022029422 | A1 | 10 February 2022 |
| | | | | EP | 3994745 | A1 | 11 May 2022 |
| | | | | EP | 4156329 | A1 | 29 March 2023 |
| | | | | JP | 2023517052 | A | 21 April 2023 |
| | | | | KR | 20220156964 | A | 28 November 2022 |
| CN | 113169307 | A | 23 July 2021 | GB | 201818235 | D0 | 26 December 2018 |
| | | | | US | 2020152974 | A1 | 14 May 2020 |
| | | | | US | 11165054 | B2 | 02 November 2021 |
| | | | | JP | 2022506881 | A | 17 January 2022 |
| | | | | GB | 201820742 | D0 | 30 January 2019 |
| | | | | GB | 2578797 | A | 27 May 2020 |
| | | | | US | 2022059825 | A1 | 24 February 2022 |
| | | | | EP | 3878032 | A1 | 15 September 2021 |
| | | | | KR | 20210089720 | A | 16 July 2021 |
| | | | | WO | 2020095066 | A1 | 14 May 2020 |
| | | | | US | 2022123282 | A1 | 21 April 2022 |
| KR | 20160024325 | A | 04 March 2016 | KR | 101677258 | B1 | 17 November 2016 |
| WO | 2022029423 | A1 | 10 February 2022 | KR | 20230047406 | A | 07 April 2023 |
| CN | 115849381 | A | 28 March 2023 | | None | | |
| CN | 107221654 | A | 29 September 2017 | | None | | |
| CN | 108336336 | A | 27 July 2018 | | None | | |
| CN | 113178562 | A | 27 July 2021 | | None | | |
| CN | 113044828 | A | 29 June 2021 | | None | | |
| JP | 2012043546 | A | 01 March 2012 | JP | 5494343 | B2 | 14 May 2014 |

Form PCT/ISA/210 (patent family annex) (July 2022)